# EUROPEAN PATENT APPLICATION

(11) **EP 2 075 422 A1**
(43) Date of publication of application: **01.07.2009**
(21) Application number: 08171960.1
(22) Date of filing: 17.12.2008
(51) Int. Cl.: F01N 3/08, B01D 53/32, B01D 53/94

(54) **Exhaust gas treatment system for an internal combustion engine**

(30) Priority: 25.12.2007 JP 2007332319
(71) Applicant: KABUSHIKI KAISHA TOYOTA JIDOSHOKKI, Kariya-shi, Aichi-ken (JP)
(72) Inventor: Hoshi, Sakutaro, Kariya-shi Aichi 448-8671 (JP); Yoshida, Koji, Kariya-shi Aichi 448-8671 (JP); Kidokoro, Atsushi, Kariya-shi Aichi 448-8671 (JP); Sasatani, Toru, Kariya-shi Aichi 448-8671 (JP)
(74) Representative: TBK-Patent

(57) **Abstract**

An exhaust gas treatment system for an internal combustion engine includes an exhaust pipe (6) and an energy applying device (12). Exhaust gas discharged from the internal combustion engine flows into the exhaust pipe (6). The energy applying device (12) applies energy to the exhaust gas flowing through the exhaust pipe. The energy applied to the exhaust gas is greater than the energy for decomposing nitrogen monoxide (NO) and less than the energy for decomposing nitrogen (N₂).

## Description

### BACKGROUND OF THE INVENTION

The present invention relates to an exhaust gas treatment system for an internal combustion engine.

Combustion in an internal combustion engine, a boiler and the like results in discharging to the atomosphere of such exhaust gases as particulate matters (PM), hydrocarbons (HC), sulfur oxides (SOx including SO, SO₂), nitrogen oxides (NOx including NO, NO₂ and N₂O) and carbon oxides (COx including CO, CO₂). Regulations on emissions of such exhaust gas components have become more strict recently in consideration of environmental issues such as global warming. Therefore, importance has been attached to establishment of technologies for exhaust gas purification. Though there are many restrictions in size, weight, cost, working efficiency, maintenance and the like of exhaust gas purification system for transportation device such as a vehicle, demand for effective exhaust gas treatment system is expected to be expanded rapidly. Therefore, development of such exhaust gas treatment system with high efficiency is now an urgent need.

In a gasoline engine for vehicle, the engine operation is controlled based on signals from an oxygen sensor or the like such that a theoretical air-fuel ratio is obtained. This allows an oxidation-reduction catalytic converter (three-way catalyst) using platinum and the like to be used for removing PM, HC and NOx from exhaust gas. On the other hand, a diesel engine has good fuel efficiency, and emissions of carbon oxides such as CO₂ and the like from the diesel engine are about 20 to 30 percent lower than that from the gasoline engine. However, exhaust gas from the diesel engine contains a large amount of excess oxygen, so that the use of a reduction catalyst in the diesel engine is difficult. Thus, various methods for reducing NOx in the diesel engine have been put into practice use. According to one method, exhaust gas is recirculated for reducing NOx, which is called exhaust gas recirculation (EGR), thereby generating excess PM, and then the excess PM is captured by a filter or the like that is called diesel particulate filter (DPF). According to another method, urea is injected into exhaust gas for reducing NOx, which is called urea selective catalytic reduction (Urea-SCR). According to still another method, NOx is absorbed temporarily and then reduced by fuel and the like at any appropriate time, which is called diesel particulate matter-NOx reduction system (DPNR).

However, in the case of the combination of EGR and DPF, the effect of reducing NOx emissions is relatively small and the driving performance of the vehicle is restricted. The method of Urea-SCR is disadvantageous in the installation of a urea tank and the need of replenishing the tank with urea. In the method of DPNR, periodical injection of surplus fuel is required, thereby deteriorating the fuel consumption of the vehicle. These methods for exhaust gas purification need to be performed in accordance with conditions of engine combustion. Therefore, engine controlling becomes complicated, so that engine development becomes enlarged, with the result that the development period is extended and the cost thereof increased accordingly. All the methods require a noble metal such as platinum as a catalyst, which is a problem in view of the cost and the need of conserving natural resources.

To solve the above problems, Japanese Patent Application Publication 61-31615 discloses an engine which reforms NOx by means of electric discharge. In this engine, a dissociation cylinder (reformer) is directly connected to an exhaust pipe of the engine, and corona discharge needles are arranged in the outer periphery of the dissociation cylinder. NOx in exhaust gas is decomposed by electric discharge in the dissociation cylinder, and the oxygen atom (oxygen radical) of the decomposed NOx combines with carbon oxide in exhaust gas thereby to form carbon dioxide. Meanwhile, nitrogen atom in the decomposed NOx combines with the other nitrogen atom in the decomposed NOx thereby to form nitrogen (N₂). As a result, NOx in exhaust gas is reduced. However, it is hard to reduce NOx efficiently unless the following conditions are satisfied. A first condition is that the amount of carbon monoxide in exhaust gas is sufficiently greater than the amount of oxygen radical produced by the electric discharge. A second condition is that the chemical reactivity of nitrogen (nitrogen radical) separated from nitrogen oxides (NOx) is low enough to inhibit the production of NOx.

When the diesel engine is being operated under a lean burn condition or combustion with excess air (oxygen), exhaust gas contains therein a large amount of oxygen. This approach will not be expected to be satisfied with the first condition. Meanwhile, it is well known that under complete combustion wherein combustion takes place under a high temperature (oxidation reaction) and PM and HC are decreased effectively, but NOx emissions are increased. This approach will not be expected to be satisfied with the second condition under engine operation at a high temperature such as complete combustion or high power operation. Thus, when the electric discharge merely occurs under a high temperature of exhaust gas, it results that NOx is regenerated easily and, in some cases, NOx is increased in exhaust gas.

The present invention is directed to provide an exhaust gas treatment system for an internal combustion engine which can reduce NOx reliably while preventing nitrogen generated by the decomposition of NOx from being further decomposed to regenerate NOx.

### SUMMARY OF THE INVENTION

In accordance with the present invention, an exhaust gas treatment system for an internal combustion engine includes an exhaust pipe and an energy applying device. Exhaust gas discharged from the internal combustion engine flows into the exhaust pipe. The energy applying device applies energy to the exhaust gas flowing through the exhaust pipe. The energy applied to the exhaust gas is greater than the energy for decomposing nitrogen monoxide (NO) and less than the energy for decomposing nitrogen (N₂). Thus, NOx is decomposed, but N₂ is hardly decomposed, so that N₂ generated by decomposition of NOx is prevented from being further decomposed to regenerate NOx. Thus, nitrogen atoms in exhaust gas are gradually combined to form a stable nitrogen molecule (N₂). Therefore, NOx in exhaust gas can be reduced reliably.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a schematic view of a diesel engine having an exhaust gas treatment system of a preferred embodiment of the present invention;
Fig. 2 is a graph explaining the operation of a low-temperature plasma generator forming a part of the exhaust gas treatment system according to the preferred embodiment of the present invention; and
Fig. 3 is a schematic view of a diesel engine with the exhaust gas treatment system according to an alternative embodiment of the present invention.

### DETAILED DESCRIPTION OF THE PREFERRED EMBODIMENTS

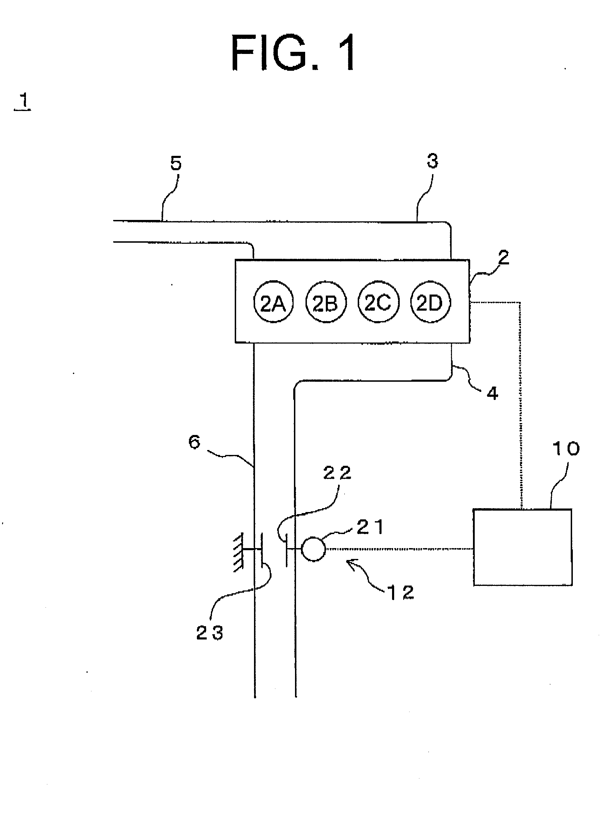

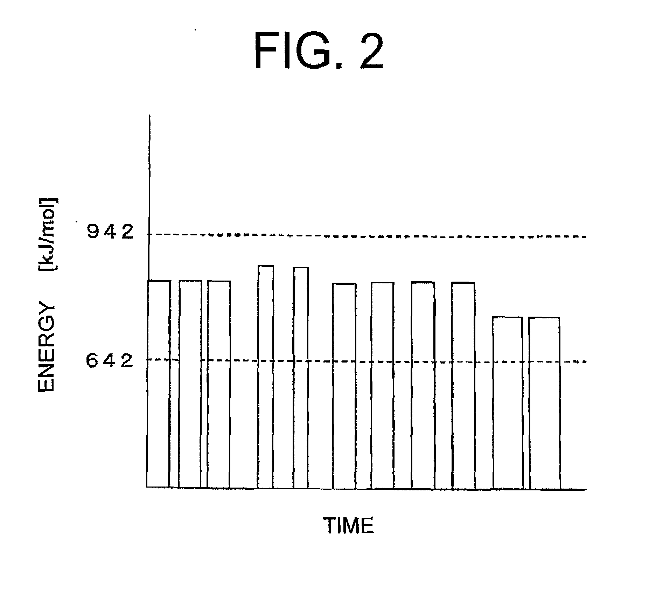

The following will describe the preferred embodiment of the present invention with reference to Figs. 1 and 2. Fig. 1 shows a diesel engine 1 which is equipped with an exhaust gas treatment system according to the preferred embodiment of the present invention. The diesel engine 1 includes a cylinder block 2 having four cylinders defining therein combustion chambers 2A, 2B, 2C, 2D, an intake manifold 3 and a exhaust manifold 4 both of which are provided in communication with the respective combustion chambers 2A, 2B, 2C, 2D. The intake manifold 3 is connected to an intake pipe 5 in which intake air flows. The exhaust manifold 4 is connected to an exhaust pipe 6 in which exhaust gas discharged from the combustion chambers 2A, 2B, 2C, 2D flows. A low-temperature plasma generator 12 is disposed in the exhaust pipe 6. The diesel engine 1 has an electric control unit (ECU) 10. The low-temperature plasma generator 12 serves as an energy applying device.

The low-temperature plasma generator 12 includes a high-frequency power source 21, and a pair of electrode plates 22, 23. The high-frequency power source 21 is electrically connected to the ECU 10. The electrode plate 22 is disposed inside of the exhaust pipe 6 and connected to the high-frequency power source 21. The electrode plate 23 is disposed inside of the exhaust pipe 6 and grounded. As shown in Fig. 1, the electrode plates 22, 23 are disposed parallel and spaced apart to each other in the exhaust pipe 6. The electrode plates 22, 23 are covered with a dielectric material, respectively.

The following will describe the operation of the diesel engine 1 with the exhaust gas treatment system according to this preferred embodiment of the present invention with reference to Fig. 1. In operation of the diesel engine 1, air flowing in the intake pipe 5 flows into the combustion chambers 2A, 2B, 2C, 2D through the intake manifold 3. In the respective combustion chambers 2A, 2B, 2C, 2D, the intake air is compressed by pistons (not shown), and then fuel injected into the compressed air from an injection nozzle (not shown) is ignited for combustion. Combustion gas is discharged from the combustion chambers 2A, 2B, 2C, 2D as exhaust gas to the exhaust manifold 4.

When the exhaust gas flows from the exhaust manifold 4 through the exhaust pipe 6, the ECU 10 activates the high-frequency power source 21 to cause a local electric discharge between a pair of the electrode plates 22, 23 in accordance with the amount of exhaust gas. By so doing, the ambient temperature of plasma is prevented from increasing (or low-temperature plasma), so that stable plasma reaction continues to achieve under a pressure near the atmospheric pressure. As shown in Fig. 2, the electric discharge occurs in a pulse manner that discharge (ON) and non-discharge (OFF) are repeated alternately. The electric discharge energy is controlled by adjusting the frequency and the voltage in accordance with the amount of exhaust gas, thereby making it possible to prevent nitrogen (N₂) in the exhaust gas from being decomposed. Exhaust gas flowing between the electrode plates 22, 23 collides with electrons which are accelerated in the electric field between the electrode plates 22, 23, thus NOx in exhaust gas being decomposed thereby to produce nitrogen (N₂), oxygen (O₂) and the other oxides. As a result, NOx in exhaust gas is reduced. The electric discharge energy between the electrode plates 22, 23 is set greater than energy for decomposing nitrogen monoxide (NO) and less than energy for decomposing nitrogen (N₂), or it is set in the range from 642 to 942 kJ/mol. This prevents the nitrogen (N₇) produced by decomposing NOx from being decomposed to regenerate NOx.

Allowing exhaust gas to pass through the low-temperature plasma generator 12, NOx in the exhaust gas is decomposed to produce N₂, O₂ and the other oxide, which are then emitted into the atmosphere.

The low-temperature plasma generator 12 provides exhaust gas with an electric discharge energy that is larger than energy capable of decomposing nitrogen monoxide (NO), but less than energy capable of decomposing nitrogen (N₂). Thus, NOx in exhaust gas is decomposed to produce N₂, O₂ and the other oxygen, but the produced N₂ is hardly decomposed to regenerate NOx at all. Thus, N₂ produced by decomposition of NOx is prevented from being decomposed into NOx. Therefore, almost all nitrogen atoms in exhaust gas are consequently combined to form a stable nitrogen molecule (N₂), with the result that NOx in exhaust gas is reduced reliably.

The low-temperature plasma generator 12 is advantageous in that it has a compact structure in which a pair of the electrode plates 22, 23 is arranged within the exhaust pipe 6 and the high-frequency power source 21 is arranged outside the exhaust pipe 6. Thus, the low-temperature plasma generator 12 may be mounted even to a narrow exhaust pipe. Furthermore, energy consumption may be reduced in comparison with a system using a thermal plasma generator.

In this preferred embodiment, the applying energy is adjustable according to the amount of exhaust gas, however, the present invention is not limited. Alternatively, the applying energy may be adjustable according to the exhaust gas temperature, as well.

In this preferred embodiment, there is provided only single low-temperature plasma generator. Alternatively, the energy applying device may be composed of a plurality of low-temperature plasma generators. The use of a plurality of low-temperature plasma generators expands the area where the energy is applied to the exhaust gas, so that more amount of NOx may be decomposed. The plural tow-temperature plasma generators may be arranged in series along the exhaust pipe 6. Alternatively, the exhaust pipe may be branched and a low-temperature plasma generator may be disposed in each branched pipe so that the plural low-temperature plasma generators are provided in parallel arrangement. The energy applying device of the present invention is not limited to the low-temperature plasma generator. Alternatively, any device that is operable to apply energy of a predetermined range to exhaust gas, for example, an ultraviolet irradiating unit is usable. Therefore, the present invention does not limit the applying energy to plasma. Alternatively, various other kinds of means are usable for applying energy to exhaust gas.

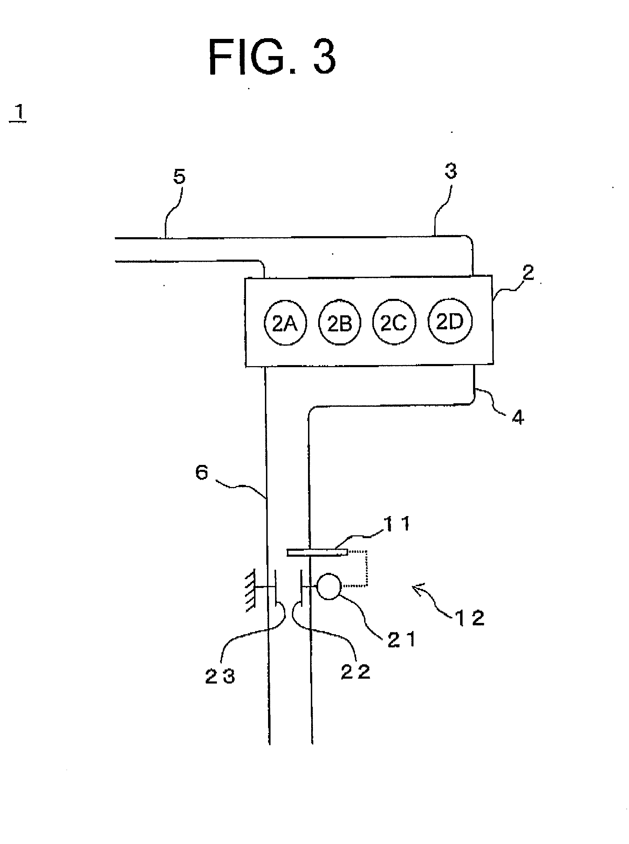

In the preferred embodiment, the ECU 10 controls the operation of the high-frequency power source 21 based on the amount of exhaust gas. Alternatively, a NOx detector 11 may be provided for detecting the NOx concentration in exhaust gas, as shown in Fig. 3, and the operation of high-frequency power source 21 may be controlled in accordance with the detected value of the NOx detector 11. NOx concentration can be estimated based on the relation between a specific operating condition of the diesel engine 1 and its corresponding preliminarily measured NOx, and plasma may be generated in accordance with such estimated NOx concentration. This effectively reduces the NOx concentration to an appropriately low level. Controlling the plasma appropriately, PM, HC, and COx can be removed effectively. By generating, for example, oxygen radical (active oxygen) and ozone (O₃), PM can be changed to CO and CO₂, HC to H₂O, CO and CO₂, and CO to CO₂, respectively.

In the above-described preferred embodiment, the exhaust gas treatment system is applied to the diesel engine 1 as an internal combustion engine, but it is applicable to other apparatuses than the diesel engine 1. Alternatively, the exhaust gas system of the present invention is applicable to a gasoline engine, a boiler, and the like.

Therefore, the present examples and embodiments are to be considered as illustrative and not restrictive, and the invention is not to be limited to the details given herein but may be modified within the scope of the appended claims.

An exhaust gas treatment system for an internal combustion engine includes an exhaust pipe and an energy applying device. Exhaust gas discharged from the internal combustion engine flows into the exhaust pipe. The energy applying device applies energy to the exhaust gas flowing through the exhaust pipe. The energy applied to the exhaust gas is greater than the energy for decomposing nitrogen monoxide (NO) and less than the energy for decomposing nitrogen (N₂).

## Claims

1. An exhaust gas treatment system for an internal combustion engine (1) comprising:
an exhaust pipe (6) into which exhaust gas discharged from the internal combustion engine (1) flows; and
an energy applying device (12) for applying energy to the exhaust gas flowing through the exhaust pipe (6),
**characterized in that** the energy applied to the exhaust gas (12) is greater than the energy for decomposing nitrogen monoxide (NO) and less than the energy for decomposing nitrogen (N₂).

2. The exhaust gas treatment system according to claim 1, **characterized in that** the applying energy by the energy applying device (12) is set in a range from 642 to 942 kJ/mol.

3. The exhaust gas treatment system according to claim 1 or 2, **characterized in that** the applying energy by the energy applying device (12) is adjustable according to amount of the exhaust gas.

4. The exhaust gas treatment system according to any one of claims 1 through 3, **characterized in that** the applying energy by the energy applying device (12) is adjustable according to temperature of the exhaust gas.

5. The exhaust gas treatment system according to any one of claims 1 through 2, the exhaust gas treatment system further comprising a NOx detector (11) for detecting NOx concentration, and **characterized in that** the operation of the energy applying device (12) is controlled based on NOx concentration in the exhaust gas.

6. The exhaust gas treatment system according to any one of claims 1 through 5, **characterized in that** the energy applying device (12) is a low-temperature plasma generator.

7. The exhaust gas treatment system according to any one of claims 1 through 6, **characterized in that** the low-temperature plasma generator (12) has a pair of electrode plates (22, 23) arranged within the exhaust pipe (6) and a high-frequency power source (21) connects to the electrode plates (22, 23).

8. The exhaust gas treatment system according to any one of claims 1 through 5, **characterized in that** the energy applying device (12) is an ultraviolet irradiating unit.

9. The exhaust gas treatment system according to any one of claims 1 through 8, **characterized in that** the exhaust gas treatment system has a plurality of the energy applying devices (12).

10. The exhaust gas treatment system according to any one of claims 1 through 9, **characterized in that** the plurality of the energy applying devices (12) is arranged in series along the exhaust pipe (6).

11. The exhaust gas treatment system according to any one of claims 1 through 9, **characterized in that** the exhaust pipe (6) is branched and the energy applying devices (12) are disposed in each branched exhaust pipe (6) in parallel arrangement.
